(19)

Europäisches
Patentamt
European
Patent Office
Office européen
des brevets

(11) **EP 4 357 837 A1**

(12) **EUROPEAN PATENT APPLICATION**
published in accordance with Art. 153(4) EPC

(43) Date of publication:
**24.04.2024 Bulletin 2024/17**

(21) Application number: **22841263.1**

(22) Date of filing: **07.07.2022**

(51) International Patent Classification (IPC):
***G02B 27/01*** *(2006.01)*

(52) Cooperative Patent Classification (CPC):
**G02B 27/01**

(86) International application number:
**PCT/CN2022/104451**

(87) International publication number:
**WO 2023/284627 (19.01.2023 Gazette 2023/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.07.2021 CN 202110790671**

(71) Applicant: **Huawei Technologies Co., Ltd.
Shenzhen, Guangdong 518129 (CN)**

(72) Inventors:
• **YAO, Zhanshi
  Shenzhen, Guangdong 518129 (CN)**
• **GUO, Rui
  Shenzhen, Guangdong 518129 (CN)**
• **LI, Gen
  Shenzhen, Guangdong 518129 (CN)**
• **MENG, Peiwen
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **OPTICAL DISPLAY ELEMENT AND OPTICAL DEVICE**

(57) Disclosed are an optical display element (102), an optical device, an augmented reality near-eye imaging system, a head-up display system, and a vehicle. The optical device may be an optical filter, an optical phase plate, or a spatial optical communication device. The optical display element (102) includes a plurality of stripes (1020). The stripes (1020) are arc-shaped and have a same bending direction, and the stripes (1020) are configured to reflect operating light of the optical display element (102), so that the operating light is imaged. The stripe (1020) includes a plurality of resonance elements (10221), and the operating light generates a resonance effect in one or more of the resonance elements (10221). An optical grating structure has a micrometer/nanometer size and a relatively small volume, and this reduces space occupancy and implements miniaturization of a device. In addition, diffraction efficiency of the operating light can be selectively improved by using the resonance elements, thereby implementing a high reflectivity for an operating-light wavelength and implementing a wavelength selection characteristic.

FIG. 4a

EP 4 357 837 A1

## Description

This application claims priority to Chinese Patent Application No. 202110790671.2, filed with the China National Intellectual Property Administration on July 13, 2021 and entitled "OPTICAL DISPLAY ELEMENT AND OPTICAL DEVICE", which is incorporated herein by reference in its entirety.

## TECHNICAL FIELD

Embodiments of this application relate to the field of optical technologies, and in particular, to an optical display element, an optical device, an augmented reality near-eye imaging system, a head-up display system, and a vehicle.

## BACKGROUND

An augmented reality (augmented reality, AR) technology is a technology that combines virtual information with real-world information. An objective of the augmented reality technology is to embed a virtual world into a real world on a screen and perform interaction, so that physical object information (for example, visual information, sounds, or tactile sense) that is difficult to experience in a time and space range in the real world may be superimposed by simulation by using a computer, so as to apply the virtual information to the real world. Currently, the augmented reality technology has been widely used in augmented reality apparatuses, for example, AR glasses, and can project a virtual image to a human eye, thereby implementing superimposition of the virtual image and a real image.

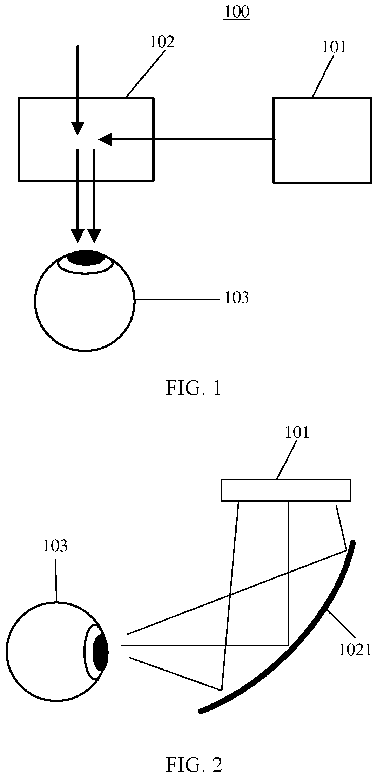

FIG. 1 is a schematic diagram of an AR near-eye imaging system. The system may be divided into two parts: an optical projection system 101 and an optical display element 102.

As shown in FIG. 1, the augmented reality near-eye imaging system includes the optical projection system 101 and the optical display element 102. The optical display element 102 is located in front of an eye of a user. The optical display element 102 can not only transmit external ambient light but also reflect light of the projection system to the human eye 103.

In some embodiments, as shown in FIG. 2, the augmented reality near-eye imaging system uses a curved-surface reflector 1021 as the optical display element to reflect and image, to the human eye, an image source emitted by the optical projection system 101. The curved-surface reflector 1021 performs common specular reflection on operating light, and presents an angle of approximately 45 degrees between a tangent direction of a reflector surface and a line of sight existing when the human eye looks straight ahead. In addition, a reflective surface is half-reflective and half-transparent, and presents a uniform wideband response, that is, for all wavelengths of a visible light band, a part of light is reflected, and the other part of the light is transmitted.

An included angle of approximately 45 degrees is presented between the curved-surface reflector 1021 and the line of sight existing when the human eye looks straight ahead. Therefore, upon wearing by the user, the imaging system usually protrudes forward by a large volume, and this is not conducive to implementing a near-eye imaging system that is compact in volume.

## SUMMARY

Embodiments of this application provide an optical display element, an optical device, an augmented reality near-eye imaging system, a head-up display system, and a vehicle, so that resonance elements are combined with stripes to enhance diffraction efficiency of a specific order.

To achieve the foregoing objective, embodiments of this application uses the following technical solution: According to a first aspect of embodiments of this application, an optical display element is provided, including a plurality of stripes. The stripes are arc-shaped and have a same bending direction, and the stripes are configured to reflect operating light of the optical display element, so that the operating light is imaged. The stripe includes a plurality of resonance elements, and the operating light generates a resonance effect in one or more of the resonance elements. Therefore, an optical grating structure has a micrometer/nanometer size and a relatively small volume, and this reduces space occupancy and implements miniaturization of a device. In addition, the resonance elements are combined with the stripes to enhance diffraction efficiency of a specific order. Diffraction of the operating light can be selectively improved by using the resonance elements, while diffraction of light in another band is maintained at a relatively low level, thereby implementing a high reflectivity for an operating-light wavelength, implementing a high transmittance for an ambient-light wavelength, and implementing a wavelength selection characteristic.

In an optional implementation, the bending direction of the stripes is parallel to a surface of the optical display element. Therefore, space for the optical display element can be reduced.

In an optional implementation, a curvature radius of at least one stripe is different from curvature radiuses of the other stripes. Therefore, a non-uniform optical grating structure can be designed based on a light incident angle, a light emergent angle, and an imaging demand. Different optical grating structures can be presented in different areas, so that first-order diffracted light can be formed after incident light is diffracted by an optical grating, and the diffracted light is emitted at an angle required by an optical system.

In an optional implementation, the curvature radiuses of the stripes change in one direction. In this way, different diffraction responses can be presented in different areas, so that light can be diffracted in different directions after entering into different areas, thereby facilitating imaging.

In an optional implementation, projections of the curvature radiuses of the stripes gradually increase on the optical display element in an incident direction of the operating light. In this way, incident light in different directions can be diffracted, thereby facilitating imaging.

In an optional implementation, a minimum curvature radius of the stripes is not less than 100 μm. Therefore, the stripes have higher diffraction efficiency uniformity.

In an optional implementation, a distance between at least one pair of adjacent stripes is different from distances between other adjacent stripes. Therefore, a non-uniform optical grating structure can be designed based on a light incident angle, a light emergent angle, and an imaging demand. Different optical grating structures can be presented in different areas, so that first-order diffracted light can be formed after incident light is diffracted by an optical grating, and the diffracted light is emitted at an angle required by an optical system.

In an optional implementation, distances between adjacent stripes change in one direction. In this way, different diffraction responses can be presented in different areas, so that light can be diffracted in different directions after entering into different areas, thereby facilitating imaging.

In an optional implementation, projections of the distances between the adjacent stripes gradually decrease on the optical display element in the incident direction of the operating light. In this way, incident light in different directions can be diffracted, thereby facilitating imaging.

In an optional implementation, a distance between two adjacent stripes is greater than or equal to 1/4 of an operating-light wavelength and less than 10 times the operating-light wavelength. Therefore, diffraction performance of the stripes for the operating light can be ensured.

In an optional implementation, an included angle between the incident direction of the operating light and a normal direction of a plane on which the stripes are located is greater than or equal to 40 degrees. Therefore, the optical display element can diffract light that is inclinedly incident at a large angle, so that the optical system has a more compact structure.

In an optional implementation, the operating light is in a convergent state after being reflected by the optical display element. Therefore, projected light that is inclinedly incident at a large angle can be diffracted by an optical grating, and then reflected based on an angle required for imaging.

In an optional implementation, after the operating light is reflected by the optical display element, a projection, on a plane on which the optical display element is located, of an eyebox area for imaging is located inside the optical display element. Therefore, imaging can be performed inside the optical display element.

In an optional implementation, the optical display element is integrated with an aberration correction function. Therefore, the optical display element is integrated with the aberration correction function, so that an AR near-eye display system can avoid using an aberration correction lens group in a front-end optical path, thereby further reducing a volume and a weight of the system.

In an optional implementation, the optical display element has different optical powers for incident operating light for two mutually orthogonal directions along the surface of the optical display element. In this way, an astigmatism problem of the optical system can be alleviated, so that the AR near-eye display system can avoid using an aberration correction lens group in a front-end optical path, thereby reducing a volume and a weight of the system.

In an optional implementation, a distance between an image formed by the operating light and the optical element is greater than or equal to 5 cm. Therefore, imaging can be performed in a proper position.

In an optional implementation, the stripe includes a convex stripe and a concave stripe that are disposed adjacent to each other. Therefore, a diffraction function of the stripe is implemented.

In an optional implementation, the convex stripe is formed by a plurality of resonance elements. In this way, the convex stripe is directly formed by resonance elements with no need to specially form a convex stripe, and a preparation process is simpler.

In an optional implementation, the convex stripe is provided with a plurality of resonance elements. Therefore, resonance elements may be disposed on an optical grating structure, and higher diffraction efficiency can be implemented.

In an optional implementation, the concave stripe is provided with a plurality of resonance elements. In this way, resonance elements may be disposed on an optical grating structure, and by combining the resonance elements with convex stripes of an optical grating, higher diffraction efficiency can be implemented without increasing process complexity.

In an optional implementation, the stripe includes a plurality of spaced resonance elements, and a distance between adjacent resonance elements of each stripe is less than or equal to 2 times the operating wavelength. Therefore, resonance intensity can be improved, which helps generate higher diffraction efficiency.

In an optional implementation, a resonance manner of the resonance element is any one or more of Mie resonance, guided-mode resonance GMR, bound states in the continuum BIC resonance, or a whispering gallery mode WGM. Therefore, a resonance phenomenon of a single resonance element can be utilized.

In an optional implementation, the stripe includes a plurality of continuously arranged resonance elements. Therefore, a limitation effect of a structure on a light field can be enhanced to form a resonance effect of a higher quality factor.

In an optional implementation, a resonance manner of the resonance element is any one or more of guided-mode resonance GMR and bound states in the continuum BIC resonance. Therefore, the resonance element can achieve a resonance effect of a higher quality factor.

In an optional implementation, a height of the resonance element is less than 1 $\mu$m. Therefore, higher transparency is ensured, and a process is simple.

In an optional implementation, a cross-sectional shape of the resonance element includes a circle, a rectangle, a cross, a T shape, or a trapezoid. Therefore, a shape of the resonance element is flexible, and is applicable to a plurality of operating scenarios.

In an optional implementation, the optical display element includes a plurality of sub-areas, the plurality of sub-areas are located on a same plane, and a blank area exists between adjacent sub-areas. Therefore, transparency of the optical display element is increased, and an ambient-light transmittance of the stripes can be increased.

In an optional implementation, the optical display element includes a plurality of sub-areas, and the plurality of sub-areas are stacked in a direction perpendicular to the plane on which the stripes are located.

In an optional implementation, an optical display element of each sub-area corresponds to one operating-light wavelength, and the optical display elements of the plurality of sub-areas have at least two operating-light wavelengths. Therefore, stripes in different sub-areas have different wavelength selectivity, so that the stripes in the plurality of sub-areas can implement diffraction for a plurality of wavelengths.

In an optional implementation, operating-light wavelengths of the plurality of included sub-areas include three colors: red, green, and blue. Therefore, color diffractive imaging is implemented.

In an optional implementation, a radian of each of the stripes is less than $\pi$. Therefore, the stripes have higher diffraction efficiency uniformity.

According to a second aspect of embodiments of this application, an optical device is provided. The optical device includes an optical projection system and the optical display element described above. The optical projection system is configured to generate operating light, and emit the operating light to the optical display element. The optical display element is configured to reflect the operating light to a human eye. Therefore, as the optical device uses the foregoing optical display element, a structure is more compact, and diffraction efficiency of the operating light is higher.

In an optional implementation, a projection of the optical projection system on the optical display element is in a bending direction of the stripes, and a curvature-radius direction of the stripe points to the projection of the optical projection system on the optical display element. Therefore, light emitted by the optical projection system can be reflected to a human eye by using the optical display element.

According to a third aspect of embodiments of this application, an augmented reality near-eye imaging system is provided. The augmented reality near-eye imaging system includes the optical device described above. Therefore, the stripe has a thickness only at a micrometer/nanometer scale, and has a negligible volume.

According to a fourth aspect of embodiments of this application, a head-up display system is provided. The head-up display system includes the optical device described above. Therefore, a size of the head-up display system can be reduced.

According to a fifth aspect of embodiments of this application, a vehicle is provided. The vehicle includes the head-up display system described above. Therefore, vehicle space occupied by the head-up display system can be reduced.

**BRIEF DESCRIPTION OF DRAWINGS**

FIG. 1 is a schematic diagram of an AR near-eye imaging system;
FIG. 2 is a schematic diagram of another AR near-eye imaging system;
FIG. 3 is a schematic diagram of a structure of an optical display element according to an embodiment of this application;
FIG. 4a is a locally enlarged view of A in FIG. 3;
FIG. 4b is another locally enlarged view of A in FIG. 3;
FIG. 4c is another locally enlarged view of A in FIG. 3;
FIG. 4d is a locally enlarged view of A in FIG. 3;
FIG. 4e is a locally enlarged view of A in FIG. 3;
FIG. 5 is a schematic diagram of an operating state of a resonance element according to an embodiment of this application;
FIG. 6 is a cross-sectional view of a resonance element according to an embodiment of this application;
FIG. 7 is a diagram of an operating state of an AR near-eye display system according to Example 1;
FIG. 8 is a schematic diagram of wavelength selection performed by an optical display element in Example 1;
FIG. 9 is a schematic diagram of an imaging result of an optical display element according to Example 1;
FIG. 10 is a schematic diagram of a structure of another optical display element according to an embodiment of this application;
FIG. 11 is a schematic diagram of a structure of another optical display element according to an embodiment of this application;
FIG. 12 is a three-dimensional diagram of the optical display element shown in FIG. 11;
FIG. 13 is a schematic diagram of an operating state of a head-up display system according to Example 2;

FIG. 14 is a schematic diagram of an operating state of a beam-collimating element according to Example 3; and

FIG. 15 is a schematic diagram of an operating state of a beam-focusing element according to Example 4.

# DESCRIPTION OF EMBODIMENTS

To make the objectives, technical solutions, and advantages of this application clearer, the following further describes this application in detail with reference to the accompanying drawings.

The terms "first", "second", and the like below are used only for the purpose of description and cannot be understood as indicating or implying relative importance or implicitly indicating a quantity of technical features indicated. Therefore, features defined by "first", "second", and the like can explicitly or implicitly include one or more of the features. In the descriptions of this application, "a plurality of" means two or more, unless otherwise specified.

In addition, in this application, orientation terms such as "upper" and "lower" are defined relative to orientations at which components in the accompanying drawings are schematically placed. It should be understood that, these directional terms are relative concepts and are used for relative description and clarification, and may vary accordingly with the orientations at which the components in the accompanying drawings are placed.

An embodiment of this application provides an optical device. The optical device includes but is not limited to a head-up display (HUD, head-up display), a virtual reality (VR, virtual reality) system, an augmented reality (augmented reality, AR) near-eye imaging system, an optical filter, an optical phase plate, spatial optical communication, and the like.

In this application, that the optical device is an AR near-eye imaging system is used as an example for description.

As shown in FIG. 1, the AR near-eye display system includes an optical projection system 101 and an optical display element 102. The optical display element 102 is located in front of an eye of a user. The optical display element 102 can not only transmit external ambient light but also reflect light of the projection system to the human eye 103.

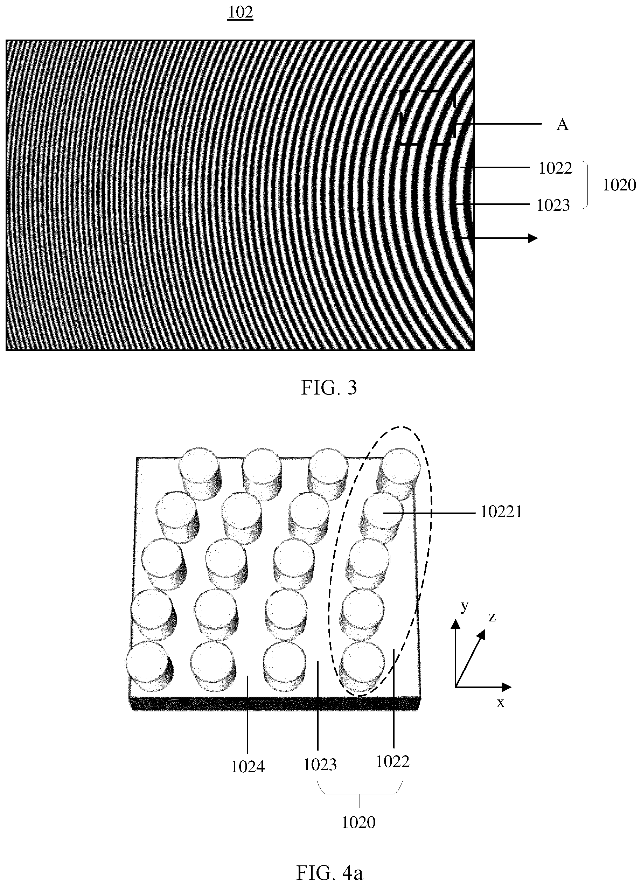

The optical display element 102 provided in this embodiment of this application is shown in FIG. 3. For example, the optical display element 102 includes a plurality of stripes 1020.

In some embodiments, as shown in FIG. 4a, the optical display element 102 further includes a substrate 1024, and the stripes 1020 are disposed on the substrate 1024.

A material of the substrate 1024 is not limited in this embodiment of this application. The material of the substrate 1024 includes but is not limited to silicon oxide, silicon nitride, titanium oxide, silicon, a polymer, metal, and the like. The stripes 1020 may use a material same as or different from that of the substrate 1024.

A shape of the stripe 1020 is not limited in this embodiment of this application. In some embodiments, the stripes 1020 are arc-shaped, and a bending direction of the stripes 1020 is parallel to a plane of the optical display element 102.

As shown in FIG. 3, the stripes 1020 have a same bending direction, and the stripes 1020 are configured to reflect operating light of the optical display element 102 and transmit ambient light.

It should be noted that "the stripes 1020 have a same bending direction" means the following: All the stripes have a same arc opening direction. For example, an arc opening direction of the stripes in FIG. 3 is indicated by an arrow, and the arc opening direction of the stripes is rightward. "Same" in "same bending direction" is a qualitative rather than quantitative description.

The foregoing stripes 1020 are, for example, a diffraction grating. The diffraction grating may present a periodic structural change or refractive index change at a near-wavelength scale, and may perform periodic spatial modulation on an amplitude or a phase of incident light. A diffraction-type diffraction grating may reflect incident light at one or more specific angles. Different reflection angles correspond to specific orders of diffraction.

An angle of zero-order diffracted light of the optical grating is symmetric to an incident-light angle about a normal line of a surface of the optical grating, and is independent of an optical grating period.

An angle of higher-order diffracted light (first-order or higher) is not symmetric to the incident-light angle, and belongs to abnormal-angle reflection. Such a reflection angle is related to the optical grating period.

The diffraction grating has a simple operating principle and a compact volume, and has been widely used in the fields of spectrum measurement and optical communication.

In a case of coplanar incidence, a relationship among a period of an optical grating structure, emergent light, and incident light may be described by using an optical-grating diffraction equation:

$$\sin\theta_i - \sin\theta_m = m\lambda/d$$

$\theta_i$ is an incident angle, $\theta_m$ is a diffraction angle whose order of diffraction is m, $\lambda$ is a wavelength of the incident light, and d is a distance between adjacent stripes of the optical grating.

It should be noted that the distance between adjacent stripes of the optical grating is a distance between centers of the adjacent stripes.

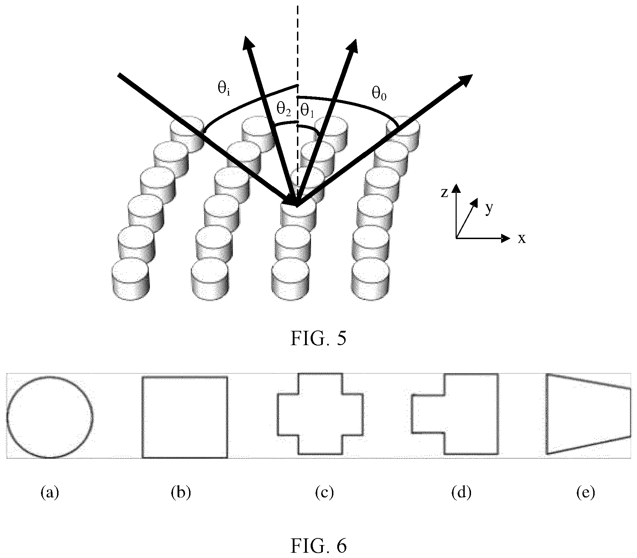

Refer to FIG. 5. A diffraction angle of zero-order diffracted light of a diffraction grating (in this case, an order m of diffraction is equal to 0, and the diffraction angle is $\theta_0$) is symmetric to an incident angle ($\theta_i$) of inci-

dent light about a normal line of a surface of the optical grating. In other words, the diffraction angle of the zero-order diffracted light is equal to the incident angle, belongs to symmetric reflection, and is independent of an optical grating period.

A diffraction angle of higher-order ($\pm$ 1st-order or higher) diffracted light is asymmetric to the incident angle of the incident light. For example, a diffraction angle of first -order diffracted light of the diffraction grating (in this case, an order m of diffraction is equal to 1 and the diffraction angle $\theta_1$) is asymmetric to the incident angle ($\theta_i$) of the incident light about the normal line of the surface of the optical grating. A diffraction angle of second-order diffracted light of the diffraction grating (in this case, an order m of diffraction is equal to 2 and the diffraction angle $\theta_2$) is asymmetric to the incident angle ($\theta_i$) of the incident light about the normal line of the surface of the optical grating, and belongs to abnormal-angle reflection. The abnormal-angle reflection is related to the optical grating period.

A structural parameter (for example, the optical grating period) of the optical grating is subject to an operating-light wavelength and a requirement of an optical system on a light deflection direction. Specifically, the stripes 1020 may be a non-uniform grating structure designed based on a light incident angle, a light emergent angle, and an imaging demand of a near-eye imaging system, and different optical grating structures may be presented in different areas, for example, spacings between the stripes 1020 are different and curvature radiuses of the stripes 1020 vary.

The spacing between the stripes and the curvature radius of the stripe 1020 may be determined based on requirements of the optical system on a light incident angle and a light emergent angle in this position, so that higher-order diffracted light can be formed after incident light is diffracted by the optical grating, and the diffracted light is emitted at an angle required by the optical system.

In this way, the stripes are placed in front of a human eye, and projected light of a specific band that is incident at each angle may be diffracted and then enter into the human eye at a specific angle, so that the light enters the human eye and is imaged.

Because the optical grating has a thickness only at a micrometer/nanometer scale and has a relatively small volume, device miniaturization is implemented.

An AR display system has a concept of an eyebox (eyebox). Within a range of the eyebox, a clear image can be observed by a human eye. In some embodiments of the present invention, a projection, of an eyebox area, on the plane of the optical display element is located inside the optical display element.

In addition, because design and preparation of the optical grating are flexible, the optical grating may be integrated with an aberration correction function after design. It should be noted that an aberration usually exists in the AR near-eye display system. If the aberration is not corrected, visual experience is degraded. Especially in an off-axis AR near-eye display system, an astigmatism phenomenon is relatively serious, causing an image blur problem. In this embodiment of this application, an optical grating period and a direction arrangement may be designed, so that the optical display element has different focal powers for two mutually orthogonal directions (for example, x and y directions), thereby alleviating an astigmatism problem of the optical system. In this way, the AR near-eye display system can avoid using an aberration correction lens group in a front-end optical path, thereby reducing a volume and a weight of the system.

Specific curvature radiuses of the stripes 1020 are not limited in this embodiment of this application. A curvature radius of at least one stripe 1020 is different from curvature radiuses of the other stripes 1020.

Therefore, a non-uniform optical grating structure can be designed based on a light incident angle, a light emergent angle, and an imaging demand. Different optical grating structures can be presented in different areas, so that first-order diffracted light can be formed after incident light is diffracted by an optical grating, and the diffracted light is emitted at an angle required by an optical system.

In some embodiments, as shown in FIG. 3, the curvature radiuses of the stripes 1020 change in one direction. In some embodiments, the curvature radiuses of the stripes 1020 change uniformly in one direction. For example, the curvature radiuses of the stripes 1020 in FIG. 3 change uniformly in a left-to-right direction. Therefore, different diffraction responses may be presented in different areas.

In some other embodiments, curvature radiuses of the stripes 1020 in different areas change in different directions, and different diffraction responses may be presented in different areas, so that light can be diffracted in different directions after entering into different areas, thereby facilitating imaging.

The distance between two adjacent stripes 1020 is not limited in this embodiment of this application. A distance between at least two adjacent stripes 1020 is different from distances between other adjacent stripes 1020.

Therefore, a non-uniform optical grating structure can be designed based on a light incident angle, a light emergent angle, and an imaging demand. Different optical grating structures can be presented in different areas, so that first-order diffracted light can be formed after incident light is diffracted by an optical grating, and the diffracted light is emitted at an angle required by an optical system.

In some embodiments, as shown in FIG. 3, distances between adjacent stripes 1020 change in one direction. In some embodiments, the distances between adjacent stripes 1020 change uniformly in one direction. For example, the distances between adjacent stripes 1020 in FIG. 3 change uniformly in the left-to-right direction. Therefore, different diffraction responses may be presented in different areas.

In some other embodiments, distances between adjacent stripes 1020 in different areas change in different directions, and different diffraction responses may be presented in different areas, so that light can be diffracted in different directions after entering into different areas, thereby facilitating imaging.

A structure of the stripe 1020 is not limited in this embodiment of this application. The stripe 1020 includes, for example, a convex stripe 1022 and a concave stripe 1023 that are disposed adjacent to each other. The convex stripe 1022 may be a convex ridge formed on a surface of the substrate 1024, and the concave stripe 1023 may be a groove formed on the surface of the substrate.

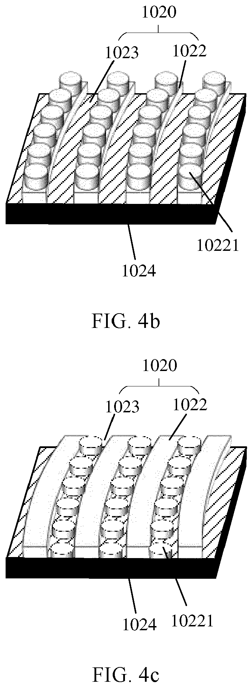

In some embodiments, as shown in FIG. 4a, FIG. 4b, and FIG. 4c, the optical display element 102 includes a substrate 1024. A plurality of convex stripes 1022 are formed on one surface of the substrate 1024, and the plurality of convex stripes 1022 are spaced. A concave stripe 1023 is formed between two adjacent convex stripes 1022, and a plurality of concave stripes 1023 are formed between the plurality of convex stripes 1022.

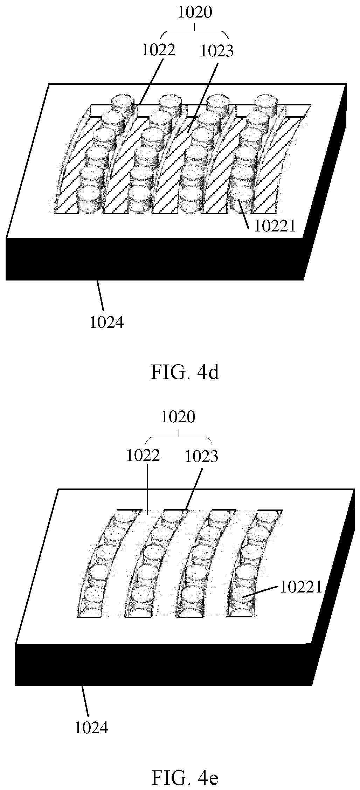

In some other embodiments, as shown in FIG. 4d and FIG. 4e, the optical display element 102 includes a substrate 1024. A plurality of concave stripes 1023 are formed on one surface of the substrate 1024, and the plurality of concave stripes 1023 are spaced. A convex stripe 1022 is formed between two adjacent concave stripes 1023, and a plurality of convex stripes 1022 are formed between the plurality of concave stripes 1023.

A specific structure of the stripe is not limited in this embodiment of this application. In some embodiments, as shown in FIG. 4a, the stripe 1020 includes a plurality of resonance elements 10221, and the resonance elements 10221 are arranged based on a contour of the stripe 1020. The resonance element 10221 is configured to limit a light field of the operating light, and a resonance wavelength of the resonance element 10221 is located within an operating light band of the optical display element 102.

A structure of the resonance element 10221 is not limited in this embodiment of this application. In some embodiments, the resonance element 10221 has a resonance cavity, and the resonance cavity can enable light of a specific wavelength to generate a resonance effect in the resonance cavity. The resonant cavity may select the input light of the specific wavelength by using the resonance effect, so as to enhance interaction between the input light and the optical display element, thereby improving efficiency of reflection of the input light of the specific wavelength by the optical display element, while maintaining reflection efficiency of input light of another wavelength at a relatively low level.

A specific material of the resonance element is not limited in this embodiment of this application. The resonance element 10221 is composed of a dielectric material. The material of the resonance element 10221 includes but is not limited to silicon nitride, titanium oxide, silicon, silicon oxide, a polymer, metal, and another dielectric material. The resonance element 10221 may use a material same as or different from that of the substrate 1024.

Therefore, because the optical display element includes the resonance element 10221 that has an optical resonance effect on a specific band, reflection efficiency of operating light can be improved, while reflection of light in another band is maintained at a relatively low level. Both a high reflectivity of the operating light and a high transmittance of light in another band can be implemented. In addition, because the optical grating is dispersive, and different wavelengths are diffracted at different angles, the optical grating in this embodiment of this application has a resonance effect, and can perform diffraction for a relatively narrow segment of wavelengths and have a relatively weak diffraction effect for other wavelengths. Therefore, a dispersion phenomenon is relatively weak, and an image blur problem caused by a dispersion characteristic of the optical grating can be alleviated.

In some embodiments, as shown in FIG. 4a, the resonance elements 10221 are disposed on a surface of the substrate 1024. A plurality of resonance elements 10221 are arranged in an arc shape to form the convex stripe 1022 in the stripe 1020. In this way, the convex stripe is directly formed by the resonance elements with no need to specially form a convex stripe on the substrate, and a preparation process is simpler.

In some other embodiments, as shown in FIG. 4b and FIG. 4d, the concave stripe 1023 and the convex stripe 1022 are disposed on the substrate 1024, and the resonance elements 10221 may be disposed on the convex stripe 1022.

Therefore, the resonance elements are combined with the stripes to enhance diffraction efficiency of a specific order. The resonance elements 10221 and the convex stripe 1022 can enhance high-order diffraction efficiency of the operating light, so that the high-order diffraction efficiency of the operating light is higher than zero-order diffraction efficiency.

In some other embodiments, as shown in FIG. 4c and FIG. 4e, the concave stripe 1023 and the convex stripe 1022 are disposed on the substrate 1024, and the resonance elements 10221 may be disposed on the concave stripe 1023.

In this way, resonance elements may be disposed on an optical grating structure, and by combining the resonance elements with convex stripes of an optical grating, higher diffraction efficiency can be implemented without increasing process complexity.

In some other embodiments, the concave stripe 1023 and the convex stripe 1022 are disposed on the substrate 1024, and the resonance elements 10221 are disposed on both the convex stripe 1022 and the concave stripe 1023.

Therefore, the resonance elements may be disposed on the optical grating structure, featuring a wider application scope.

A shape of the resonance element is not limited in this embodiment of this application. In some embodiments, as shown in FIG. 4a, the resonance element 10221 is a cylinder, and a cross-section of the resonance element 10221 is, for example, a circle shown in (a) of FIG. 6. It should be noted that a cross-sectional shape of the resonance element 10221 is a projection of the resonance element 10221 on an xy plane.

In some other embodiments, the cross-sectional shape of the resonance element 10221 may be a rectangle shown in (b) of FIG. 6, a cross shown in (c) of FIG. 6, a T shape shown in (d) of FIG. 6, or a trapezoid shown in (e) of FIG. 6. Therefore, the shape of the resonance element is flexible.

It should be noted that the cross-sectional shapes of the foregoing resonance element 10221 are merely some examples in this embodiment of this application, and a person skilled in the art may select a proper shape for the resonance element 10221 based on a requirement. These shapes all fall within the protection scope of this application.

A size of the resonance element is not limited in this embodiment of this application. A height of the resonance element 10221 in a z direction is, for example, less than 1 $\mu$m. Therefore, it can be ensured that the optical display element has higher transparency, and a process is simple.

A resonance manner of optical resonance generated by the resonance element 10221 may be Mie Mie resonance, guided-mode resonance (GMR, guided-mode resonance), bound states in the continuum (BIC, bound states in the continuum) resonance, a whispering gallery mode (WGM, whispering gallery mode), or the like.

In some embodiments, resonance elements 10221 that form a same stripe are spaced, and a distance between adjacent resonance elements 10221 in the same stripe needs to be less than or equal to 2 times the operating-light wavelength. In this case, a single element may generate resonance for the operating-light wavelength, and a resonance manner of the resonance element is any one or more of Mie resonance, guided-mode resonance GMR, bound states in the continuum BIC resonance, or a whispering gallery mode WGM.

Therefore, resonance intensity of the resonance element can be improved, which helps generate higher diffraction efficiency.

In some other embodiments, the resonance elements 10221 forming the same stripe may be continuously arranged. In this case, light fields limited in a plurality of same resonance elements 10221 interact with each other, so that resonance can be generated for the operating-light wavelength. A resonance manner of the resonance element is any one or more of guided-mode resonance GMR or bound states in the continuum BIC resonance. Therefore, a limitation effect of a structure on a light field can be enhanced to form a resonance effect of a higher quality factor.

A size of each resonance element 10221 in a curvature-radius direction of a stripe in which the resonance element is located is less than a distance between adjacent stripes in the area.

In some embodiments, in a same stripe, there may be more than one resonance element 10221 in a curvature-radius direction of an optical grating in which the stripe is located.

With reference to Example 1, the following describes in detail the optical display element provided in this embodiment of this application.

Example 1:

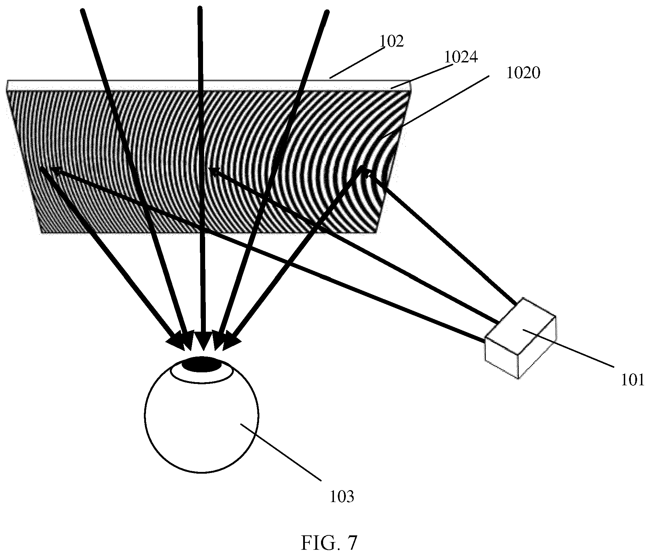

FIG. 7 is a diagram of an operating state of an AR near-eye display system according to Example 1. As shown in FIG. 7, the AR near-eye display system includes an optical projection system 101 and an optical display element 102. The optical display element 102 is located in front of an eye of a user.

A structure of the optical projection system 101 is not limited in this application. The optical projection system 101 includes at least a light-emitting element. In some embodiments, the light-emitting element may be an organic light-emitting diode (Organic Light-Emitting Diode, OLED) display. In some other embodiments, the light-emitting element may alternatively be a micro light-emitting diode (micro LED) display.

In some embodiments, the optical projection system 101 further includes, for example, an aberration correction optical element and a dispersion correction optical element.

The optical display element 102 includes a substrate 1024 and stripes 1020 disposed on the substrate 1024.

The stripes 1020 are placed in front of a human eye, and can not only transmit external ambient light but also diffract, to the human eye 103 at a specific angle, projected light emitted by the optical projection system 101, so that the light enters the human eye for imaging.

A spacing between stripes and a curvature radius of the stripe 1020 may be determined based on requirements of the optical system on a light incident angle and a light emergent angle in this position, so that first-order diffracted light can be formed after incident light is diffracted by an optical grating, and the diffracted light is emitted at an angle required by the optical system.

As shown in FIG. 7, a projection of the optical projection system 101 on a plane of the optical display element 102 is, for example, in a bending direction of the stripes 1020. In other words, a center of curvature of the stripe 1020 and a projection position of the projection system 101 on the plane of the optical display element 102 are located on a same side of the stripe 1020, for example, are both located on a right side of the stripe 1020. In addition, the curvature radius of the stripe 1020 points to the projection position of the projection system 101 on the plane of the optical display element 102.

FIG. 7 shows an overall contour of the stripes 1020. As shown in FIG. 7, the overall contour of the stripes 1020 is in a curved and gradually-changing shape, that is, distances between the stripes and curvature radiuses of the stripes 1020 gradually change with spatial positions in which the stripes 1020 are located.

Specifically, the overall contour of the stripes 1020 is curved, the plurality of stripes 1020 approximately present concentric rings, the curvature radiuses of the stripes 1020 are parallel to a surface of the substrate 1024, and the curvature radiuses of the stripes 1020 and the spacings between stripes gradually change in one direction.

It should be noted that "the plurality of stripes 1020 approximately present concentric rings" means the following: The stripes may not be arranged strictly based on concentric rings, and an error is allowed.

In a spatial dimension (a dimension in a left-to-right direction in the figure), the curvature radiuses of the stripes 1020 and the spacings between adjacent stripes change. As shown in FIG. 7, the curvature radiuses of the stripes 1020 and the spacings between adjacent stripes change uniformly in the left-to-right direction.

As shown in FIG. 7, projections of the distances between adjacent stripes 1020 gradually decrease on the optical display element 102 in a direction in which operating light is incident, that is, the spacings between adjacent stripes 1020 gradually increase from left to right, that is, a spatial arrangement of the stripes 1020 becomes sparser. In addition, projections of the curvature radiuses of the stripes 1020 gradually increase on the optical display element 102 in the direction in which the operating light is incident, that is, the curvature radiuses for bending of the stripes 1020 gradually decrease from left to right, that is, a curvature of the optical grating increases.

It should be noted that a change range of the spacings between the stripes 1020 is directly related to a light wavelength used for operating. For example, the spacing between adjacent stripes 1020 is greater than or equal to 1/4 of the light wavelength, and is less than or equal to 10 times the operating-light wavelength. Therefore, diffraction performance of the stripes for the operating light is ensured.

A minimum curvature radius for bending of the optical grating is not less than 100 $\mu$m, and a radian of each stripe is less than $\pi$.

Therefore, the stripes have higher diffraction efficiency uniformity.

In addition, in another spatial dimension (a dimension in a top-to-bottom direction in the figure), a curvature-radius direction of the stripes 1020 also gradually changes.

For example, as shown in FIG. 7, in the top-to-bottom direction in the figure, a direction in which the curvature radius of the stripe 1020 points to a center of curvature presents a direction change from lower-right to right and then upper-right.

In this example, an angle corresponding to each arc included in the curved and gradually-changing optical grating is less than 180 degrees.

At a center of the stripes, an incident angle of the operating light is not less than 40 degrees, that is, an included angle between an incident direction of the operating light and a normal direction of a surface on which the stripes 1020 are located is not less than 40 degrees. Therefore, the optical display element can diffract light that is inclinedly incident at a large angle, so that the optical system has a more compact structure.

In this case, a distance between an image formed by the operating light and the optical element is greater than or equal to 5 cm. Therefore, imaging can be performed in a proper position.

As shown in FIG. 7, the operating light is in a convergent state after being reflected by the optical display element. A structure of stripes 1020 in each area can enable projected light that is inclinedly incident at a large angle to be diffracted by the optical grating to form first-order diffracted light. The first-order diffracted light is reflected at an angle required for imaging and enters into the human eye or another optical imaging system for imaging.

After the operating light is reflected by the optical display element, a projection, on a plane on which the optical display element is located, of an eyebox area for imaging is located inside the optical display element.

Therefore, projected light that is inclinedly incident at a large angle can be diffracted by the optical grating, and then reflected based on an angle required for imaging, and is imaged inside the optical display element.

The optical display element has a thickness only at a micrometer/nanometer scale, has a compact structure, and occupies a small space. When used in the AR near-eye system, the optical display element can implement system miniaturization and is easy to use and carry.

In addition, design and preparation of the stripes are more flexible. In this embodiment of this application, an optical grating period and a direction arrangement may be designed, so that the optical display element has different focal powers for two mutually orthogonal directions (for example, x and y directions), and can be integrated with a function such aberration correction (for example, a pixel can be corrected), thereby alleviating an astigmatism problem of the optical system. In this way, the AR near-eye display system can avoid using an aberration correction lens group in a front-end optical path, thereby reducing a volume and a weight of the system.

For a specific structure of the stripe, refer to FIG. 4a. As shown in FIG. 4a, the stripes 1020 include a plurality of concave stripes 1023 and convex stripes 1022 that are disposed adjacent to each other. The convex stripe 1022 is formed by arranging a plurality of resonance elements 10221. The plurality of convex stripes 1022 are spaced. The concave stripe 1023 is formed between two adjacent convex stripes 1022. The plurality of concave stripes 1023 are formed between the plurality of convex stripes 1022.

As shown in FIG. 4a, the resonance element 10221 is in a shape of a cylinder. A height of the resonance element 10221 in a z direction is, for example, less than 1 $\mu$m .

As shown in FIG. 4a, resonance elements 10221 that form a same stripe are spaced, and a distance between adjacent resonance elements 10221 in the same stripe needs to be less than or equal to 2 times the operating-light wavelength. In this case, for example, the resonance element uses Mie resonance.

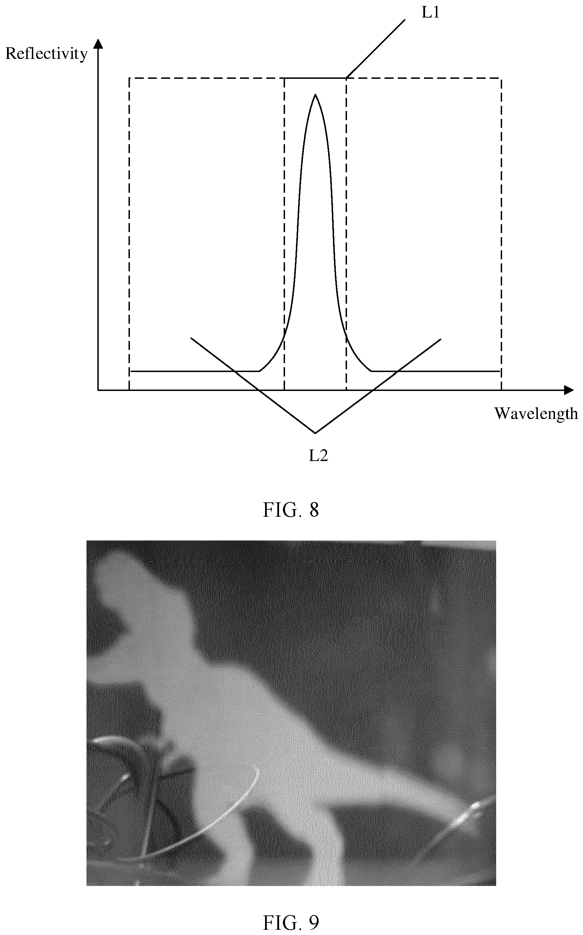

FIG. 8 is a schematic diagram of wavelength selection performed by an optical display element in Example 1. As shown in FIG. 8, a horizontal coordinate is a wavelength, and a vertical coordinate is a reflectivity. As shown in FIG. 8, the optical display element has a relatively high reflectivity for light whose wavelength is in an operating-light L1 band range, and has a low reflectivity for ambient light L2 whose operating frequency is outside the operating-light L1 band range.

Therefore, the optical display element enhances reflection of incident light in a specific band by using a resonance phenomenon, to implement wavelength selectivity, thereby improving reflection efficiency of the operating light, and in addition, maintaining reflection of ambient light in another band at a relatively low level.

FIG. 9 is a schematic diagram of an imaging result of an optical display element according to Example 1. In an experiment, a projected operating-light wavelength used is 525 nm, a material of the stripe 1020 is silicon nitride, and a material of the substrate 1024 is quartz.

A component structure is transparent to a visible light band, and an environment behind the stripe can be observed when diffractive imaging is implemented. At a center of the stripes, an incident angle of incident light is about 45 degrees.

As shown in FIG. 9, operating light can generate a clear image after being diffracted by the stripes.

In addition, the optical display element provided in this example may be implemented based on a mature semiconductor micrometer/nanometer preparation process. Preparation difficulty is low and mass production is easier to implement.

Moreover, the optical display element may be composed of a material with stable properties, and can maintain consistent performance in different environment conditions without a volume shrinkage problem.

According to the optical display element provided in this example, incident light of the optical system is diffracted by using stripes in a non-uniform structure whose overall contour presents a curved and gradually-changing shape, to form higher-order diffracted light, so that diffracted light in each area can be emitted at a light angle required by the optical system.

The stripe has a thickness only at a micrometer/nanometer scale, and has a negligible volume. In addition, owing to high flexibility in design and preparation, the stripes in the present invention may be integrated with an aberration correction function, so that the AR near-eye display system can avoid using an aberration correction lens group in a front-end optical path, thereby reducing a volume and a weight of the system.

In addition, distribution positions of the stripes 1020 on the substrate 1024 are not limited in this embodiment of this application. In the foregoing embodiment, the optical display element includes one area (one surface of the substrate 1024), and the stripes 1020 are distributed in the area.

In some other embodiments, the optical display element includes a plurality of sub-areas, and the stripes 1020 are distributed in the sub-areas.

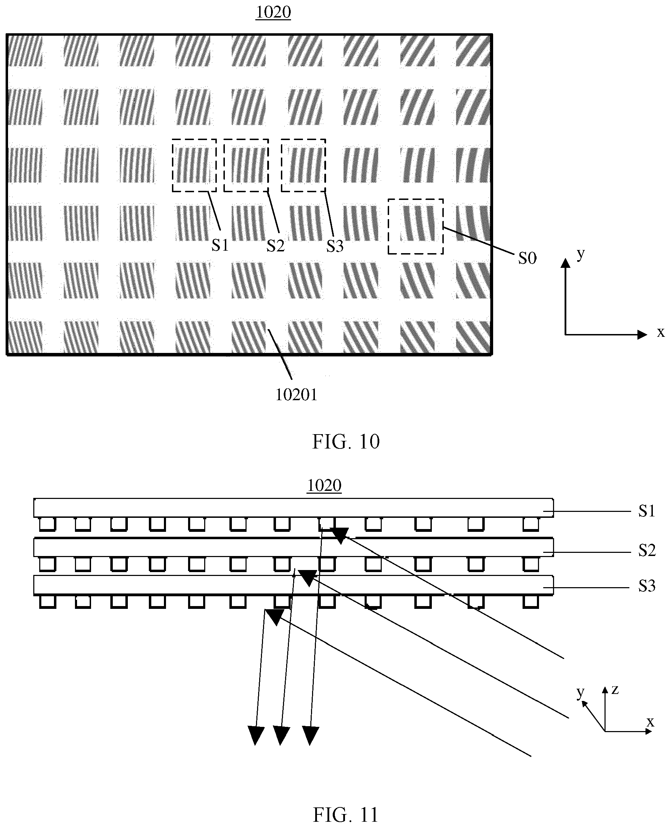

For example, as shown in FIG. 10, the plurality of sub-areas are located on a same plane, and there is no grating structure between adjacent sub-areas.

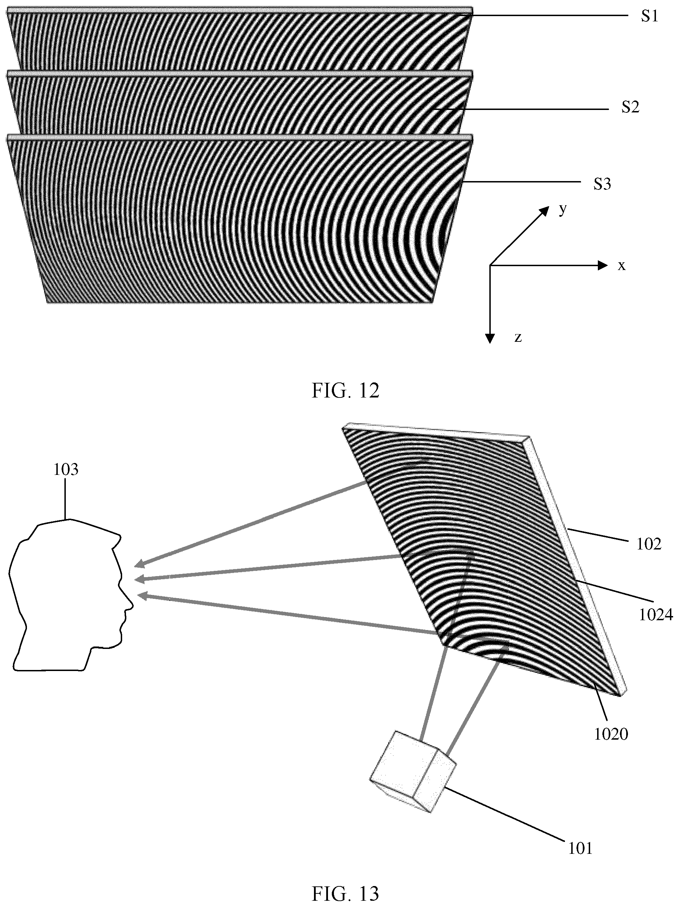

Alternatively, as shown in FIG. 11 and FIG. 12, the plurality of sub-areas are stacked in a direction perpendicular to a plane on which the stripes are located.

An optical display element of each sub-area corresponds to one operating-light wavelength, and the optical display elements of the plurality of sub-areas have at least two operating-light wavelengths. Therefore, stripes in different sub-areas have different wavelength selectivity, so that the stripes in the plurality of sub-areas can implement diffraction for a plurality of wavelengths.

In an optional implementation, operating-light wavelengths of the plurality of included sub-areas include three colors: red, green, and blue. Therefore, color diffractive imaging is implemented.

With reference to FIG. 10, FIG. 11, and FIG. 12, the following separately describes in detail cases in which the optical display element 102 includes a plurality of sub-areas.

FIG. 10 is a schematic diagram of a structure of another optical display element according to an embodiment of this application. As shown in FIG. 10, a difference between this example and the stripes 1020 in FIG. 7 lies in that, the stripes in this embodiment are distributed only in partial areas in a structure of the substrate 1024, rather than distributed on an entire surface in the structure of the substrate 1024.

As shown in FIG. 10, the optical display element 102 includes a plurality of sub-areas S0, the plurality of sub-areas S0 are located on a same plane (an XY plane shown in FIG. 10), and a blank area 10201 exists between adjacent sub-areas S0.

Refer to FIG. 10. A sub-area S0 is, for example, a rectangle, and a surface of a structure of the substrate 1024 is divided into the plurality of sub-areas S0 by using a series of parallel lines that are perpendicular to each other. The sub-areas S0 are periodically and repeatedly arranged in two spatial dimensions (from left to right and from top to bottom), and are presented as a rectangular grid structure.

The stripes 1020 are distributed in these separated sub-areas S0, and the stripes 1020 can implement a diffraction function. Apart between adjacent sub-areas S0 is blank with no grating structure distributed.

Optical grating structures in this embodiment are distributed only in partial areas in the structure of the substrate 1024. This increases transparency of the optical display element, and can increase an ambient-light transmittance of the stripes.

In some embodiments of this example, optical grating structures corresponding to different operating wavelengths may be designed in different sub-areas (for example, different sub-areas respectively correspond to operating light that is in red, green, and blue colors and that has different wavelengths), so that an entire stripe can perform diffraction for a plurality of wavelengths, thereby implementing color diffractive imaging.

For example, as described in FIG. 10, the optical display element includes a first sub-area S1, a second sub-area S2, and a third sub-area S3 that are located at a same layer. An operating wavelength of the first sub-area S1 is red, an operating wavelength of the second sub-area S2 is green, and an operating wavelength of the third sub-area S3 is blue.

FIG. 11 is a main view of another optical display element according to an embodiment of this application. FIG. 12 is a top view of another optical display element according to an embodiment of this application. As shown in FIG. 11 and FIG. 12, the optical display element includes a plurality of sub-areas (a first sub-area S 1, a second sub-area S2, and a third sub-area S3), the plurality of sub-areas are stacked in a direction (a z direction) perpendicular to a plane on which stripes are located, and each sub-area includes a substrate and stripes disposed on the substrate.

In some embodiments of this example, stripes corresponding to different operating wavelengths may be designed in different sub-areas (for example, different sub-areas respectively correspond to operating light that is in red, green, and blue colors and that has different wavelengths), so that an entire stripe can perform diffraction for a plurality of wavelengths, thereby implementing color diffractive imaging. For example, stripes at different layers have different wavelength selectivity, so that the stripes at the plurality of layers can implement diffraction for a plurality of wavelengths.

For example, as shown in FIG. 11 and FIG. 12, the optical display element includes a first sub-area S1, a second sub-area S2, and a third sub-area S3 that are located at different layers. An operating wavelength of the first sub-area S1 is red, an operating wavelength of the second sub-area S2 is green, and an operating wavelength of the third sub-area S3 is blue.

Therefore, space in a horizontal direction for the optical display element is reduced.

In the foregoing embodiment, the optical display element may be used in the AR near-eye system. In some other embodiments, the optical display element may be further used in a head-up display (HUD) system.

With reference to Example 2, the following describes a case in which the optical display element is used in a head-up display (HUD) system.

Example 2:

FIG. 13 is a schematic diagram of an operating state of a head-up display system according to Example 2. As shown in FIG. 13, the head-up display system includes an optical projection system 101 and an optical display element 102. The optical display element 102 is located in front of an eye of a user. The optical display element 102 includes a substrate 1024 and stripes 1020 disposed on the substrate 1024. The stripes 1020 are placed in front of the human eye, and can not only transmit external ambient light but also diffract, to the human eye 103 at a specific angle, projected light emitted by the optical projection system 101, so that the light enters the human eye for imaging.

A main difference between this embodiment and the AR near-eye display system lies in a size of the stripe 1020, and a width of the optical display element 102 of the HUD system is usually 10 cm or above.

An application scenario of the head-up display (HUD) system is in-vehicle application, for example, may be mounted on a front windshield of a vehicle, instead of being directly worn in front of the human eye.

In addition, the optical display element may be further used as a beam-focusing element or a beam-collimating element. With reference to Examples 3 and 4, the following separately describes a case in which the optical display element is used as a beam-focusing element or a beam-collimating element.

Example 3:

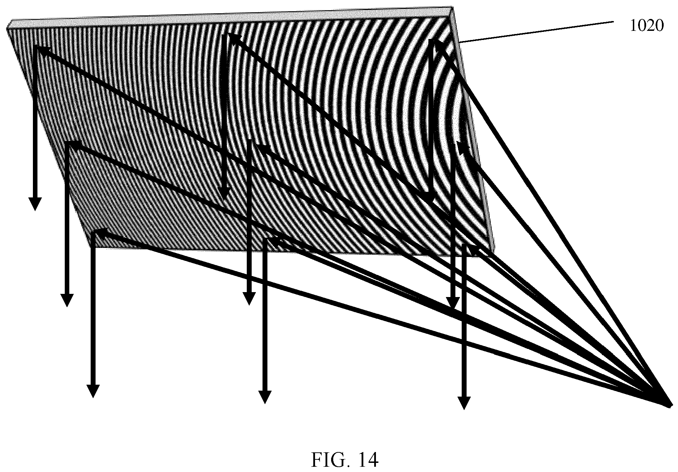

FIG. 14 is a schematic diagram of an operating state of a beam-collimating element according to Example 3. As shown in FIG. 14, in beam element application, a stripe parameter may be set, so that light that is emitted at a same point outside the component and that is incident to different areas of the stripes is diffracted by a local optical grating and then is emitted toward a same direction to form parallel light, thereby implementing beam collimation.

Example 4:

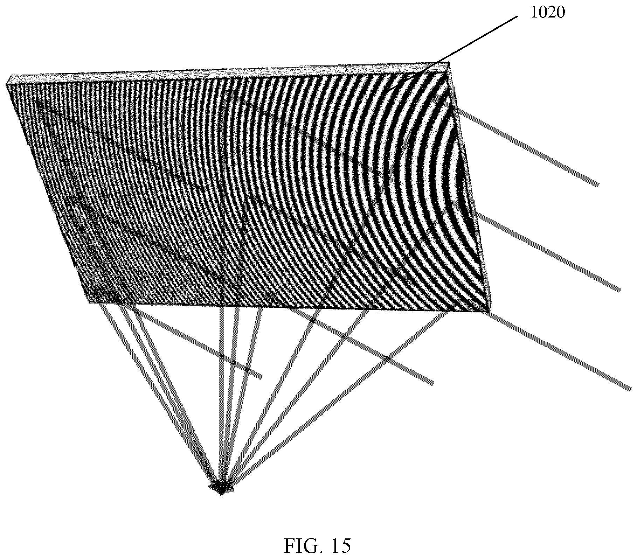

FIG. 15 is a schematic diagram of an operating state of a beam-focusing element according to Example 4. As shown in FIG. 15, in beam-focusing application, a stripe parameter may be set, so that light incident to different areas on the stripes in a same direction is diffracted by using a local optical grating and then is all reflected toward a spatial position point outside the component to form focused light, thereby implementing beam focusing.

Both a beam-focusing function and a beam-collimation function of the optical display element can be implemented by adjusting a parameter of the stripes, and an overall contour of the stripes is in a curved and gradually-changing shape, which falls within a description range of Embodiment 1. A distance between adjacent stripes and a curvature radius of the stripe may be determined based on a light wavelength used by the optical system and requirements of the optical system on input and output angles of light.

Examples 1 to 4 above are merely some embodiments of this application. In the foregoing examples, all the optical display elements in this application generate projections, which are visible to a human eye. It should be noted that the optical display element in this application may be applied not only to optical bands such as a visible light band, an infrared band, and an ultraviolet band, but also to fields of terahertz, microwaves, radio, and the like. These are all within the protection scope of this application.

The foregoing descriptions are merely specific implementations of this application, and are not intended to limit the protection scope of this application. Any modification or replacement within the technical scope disclosed in this application shall all fall within the protection scope of this application. Therefore, the protection scope of this application shall be subject to the protection scope of the claims.

**Claims**

1. An optical display element, comprising a plurality of stripes, wherein the stripes are arc-shaped and have a same bending direction, and the stripes are configured to reflect operating light of the optical display element, so that the operating light is imaged; and the stripe comprises a plurality of resonance elements, and the operating light generates a resonance effect in one or more of the resonance elements.

2. The optical display element according to claim 1, wherein the bending direction of the stripes is parallel to a surface of the optical display element.

3. The optical display element according to claim 1 or 2, wherein a curvature radius of at least one stripe is different from curvature radiuses of the other stripes.

4. The optical display element according to claim 3, wherein the curvature radiuses of the stripes change in one direction.

5. The optical display element according to claim 3 or 4, wherein projections of the curvature radiuses of the stripes gradually increase on the optical display element in an incident direction of the operating light.

6. The optical display element according to any one of claims 3 to 5, wherein a minimum curvature radius of the stripes is not less than 100 $\mu$m.

7. The optical display element according to any one of claims 1 to 6, wherein a distance between at least one pair of adjacent stripes is different from distances between other adjacent stripes.

8. The optical display element according to claim 7, wherein distances between adjacent stripes change in one direction.

9. The optical display element according to claim 7 or 8, wherein projections of the distances between the adjacent stripes gradually decrease on the optical display element in the incident direction of the operating light.

10. The optical display element according to any one of claims 7 to 9, wherein a distance between two adjacent stripes is greater than or equal to 1/4 of an operating-light wavelength and less than 10 times the operating-light wavelength.

11. The optical display element according to any one of claims 1 to 10, wherein an included angle between the incident direction of the operating light and a normal direction of a plane on which the stripes are located is greater than or equal to 40 degrees.

12. The optical display element according to claim 11, wherein the operating light is in a convergent state after being reflected by the optical display element.

13. The optical display element according to claim 11 or 12, wherein after the operating light is reflected by the optical display element, a projection, on a plane on which the optical display element is located, of an eyebox area for imaging is located inside the optical display element.

14. The optical display element according to any one of claims 1 to 13, wherein the optical display element is integrated with an aberration correction function.

15. The optical display element according to any one of claims 1 to 14, wherein the optical display element has different optical powers for incident operating light for two mutually orthogonal directions along the surface of the optical display element.

16. The optical display element according to any one of claims 1 to 15, wherein a distance between an image formed by the operating light and the optical element is greater than or equal to 5 cm.

17. The optical display element according to any one of claims 1 to 16, wherein the stripe comprises a convex stripe and a concave stripe that are disposed adjacent to each other.

18. The optical display element according to claim 17, wherein the convex stripe is formed by a plurality of resonance elements.

19. The optical display element according to claim 17, wherein the convex stripe is provided with a plurality of resonance elements.

20. The optical display element according to any one of claims 17 to 19, wherein the concave stripe is provided with a plurality of resonance elements.

21. The optical display element according to any one of claims 1 to 20, wherein the stripe comprises a plurality of spaced resonance elements, and a distance between adjacent resonance elements of each stripe is less than or equal to 2 times the operating wavelength.

22. The optical display element according to claim 21, wherein a resonance manner of the resonance element is any one or more of Mie resonance, guided-mode resonance GMR, bound states in the continuum BIC resonance, or a whispering gallery mode WGM.

23. The optical display element according to any one of claims 1 to 20, wherein the stripe comprises a plurality of continuously arranged resonance elements.

24. The optical display element according to claim 23, wherein a resonance manner of the resonance element is any one or more of guided-mode resonance GMR and bound states in the continuum BIC resonance.

25. The optical display element according to any one of claims 1 to 24, wherein a height of the resonance element is less than 1 $\mu$m.

26. The optical display element according to any one of claims 1 to 25, wherein a cross-sectional shape of the resonance element comprises a circle, a rectangle, a cross, a T shape, or a trapezoid.

27. The optical display element according to any one of claims 1 to 26, wherein the optical display element comprises a plurality of sub-areas, and the plurality of sub-areas are located on a same plane.

28. The optical display element according to any one of claims 1 to 26, wherein the optical display element comprises a plurality of sub-areas, and the plurality of sub-areas are stacked in a direction perpendicular to the plane on which the stripes are located.

29. The optical display element according to claim 27 or 28, wherein an optical display element of each sub-area corresponds to one operating-light wavelength, and the optical display elements of the plurality of sub-areas have at least two operating-light wavelengths.

30. The optical display element according to claim 27 or 28, wherein operating-light wavelengths of the plurality of comprised sub-areas comprise three colors: red, green, and blue.

31. The optical display element according to any one of claims 1 to 30, wherein a radian of each of the stripes is less than $\pi$.

32. An optical device, wherein the optical device comprises an optical projection system and the optical display element according to any one of claims 1 to 31; wherein

the optical projection system is configured to generate operating light, and emit the operating light to the optical display element; and the optical display element is configured to reflect the operating light to a human eye.

33. The optical device according to claim 32, wherein a projection of the optical projection system on the optical display element is in a bending direction of the stripes, and a curvature-radius direction of the stripe points to the projection of the optical projection system on the optical display element.

34. An augmented reality near-eye imaging system, comprising the optical device according to claim 32 or 33.

35. Ahead-up display system, comprising the optical device according to claim 32 or 33.

36. A vehicle, comprising the head-up display system according to claim 35.

FIG. 1

FIG. 2

102

FIG. 3

FIG. 4a

1020

1023 1022

10221

1024

FIG. 4b

1020

1023 1022

1024 10221

FIG. 4c

1020
1022   1023

10221

1024

FIG. 4d

1020
1022   1023

10221

1024

FIG. 4e

FIG. 5

(a)  (b)  (c)  (d)  (e)

FIG. 6

FIG. 7

FIG. 8

FIG. 9

1020

S1

S2

S3

S0

10201

FIG. 10

1020

S1

S2

S3

FIG. 11

FIG. 12

FIG. 13

1020

FIG. 14

FIG. 15

## INTERNATIONAL SEARCH REPORT

International application No.

**PCT/CN2022/104451**

### A. CLASSIFICATION OF SUBJECT MATTER

G02B 27/01(2006.01)i

According to International Patent Classification (IPC) or to both national classification and IPC

### B. FIELDS SEARCHED

Minimum documentation searched (classification system followed by classification symbols)

G02B

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT: 近眼显示, 虚拟现实, 增强现实, 平视显示, 抬头显示, 光栅, 条纹, 弧, 曲率, 波长, 选择, 共振, 谐振, near eye, display, virtual reality, augment+ reality, VR, AR, head up, HUD, grating?, stripe?, arc+, curv+, wavelength, select+, resona+

### C. DOCUMENTS CONSIDERED TO BE RELEVANT

| Category* | Citation of document, with indication, where appropriate, of the relevant passages | Relevant to claim No. |
|---|---|---|
| Y | US 2020241353 A1 (SAMSUNG ELECTRONICS CO., LTD. et al.) 30 July 2020 (2020-07-30) description, paragraphs [0056]-[0089], and figures 1-9 | 1-36 |
| Y | CN 112088141 A (FACEBOOK TECHNOLOGIES, LLC) 15 December 2020 (2020-12-15) description, paragraphs [0037]-[0072], and figures 1A-8D | 1-36 |
| A | CN 111512189 A (CSEM CENTRE SUISSE D'ELECTRONIQUE ET DE MICROTECHNIQUE SA-RECHERCHE ET DEVELOPPEMENT) 07 August 2020 (2020-08-07) entire document | 1-36 |
| A | CN 203433193 U (CHENGDU IDEALSEE TECHNOLOGY CO., LTD.) 12 February 2014 (2014-02-12) entire document | 1-36 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **31 August 2022** | **15 September 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/104451**

| Patent document cited in search report | | | Publication date (day/month/year) | Patent family member(s) | | | Publication date (day/month/year) |
|---|---|---|---|---|---|---|---|
| US | 2020241353 | A1 | 30 July 2020 | KR | 20200094604 | A | 07 August 2020 |
| CN | 112088141 | A | 15 December 2020 | US | 2019339447 | A1 | 07 November 2019 |
| | | | | WO | 2019212585 | A1 | 07 November 2019 |
| | | | | EP | 3787999 | A1 | 10 March 2021 |
| | | | | US | 10877214 | B2 | 29 December 2020 |
| CN | 111512189 | A | 07 August 2020 | US | 2020241301 | A1 | 30 July 2020 |
| | | | | WO | 2019068304 | A1 | 11 April 2019 |
| | | | | EP | 3692399 | A1 | 12 August 2020 |
| CN | 203433193 | U | 12 February 2014 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110790671